# EUROPEAN PATENT SPECIFICATION

(11) **EP 4 202 395 B1**
(45) Date of publication and mention of the grant of the patent: **18.02.2026**
(21) Application number: 21216378.6
(22) Date of filing: 21.12.2021
(51) Int. Cl.: G01M 3/28, G01M 3/32, F03D 80/70, F16C 33/10, F16C 33/66, G01F 11/28

(54) **METHOD AND DEVICE FOR DETERMINING A LEAKAGE OIL AMOUNT OF A MAIN BEARING OF A WIND TURBINE**
VERFAHREN UND VORRICHTUNG ZUR BESTIMMUNG EINER LECKAGEÖLMENGE EINES HAUPTLAGERS EINER WINDKRAFTANLAGE
MÉTHODE ET DISPOSITIF POUR DÉTERMINER LA QUANTITÉ D'HUILE DE FUITE D'UN PALIER PRINCIPAL D'UNE ÉOLIENNE

(43) Date of publication of application: 28.06.2023
(73) Proprietor: Siemens Gamesa Renewable Energy A/S, 7330 Brande (DK); Hydac A/S, 5500 Langeskov (DK)
(72) Inventor: Frydendal, Niels Karl, 7400 Herning (DK); Haugaard, Jens, 5300 Kerteminde (DK)
(74) Representative: SGRE-Association

(56) References cited:
- EP-A1- 3 739 208
- EP-A2- 0 052 396
- DE-A1- 3 711 513

## Description

### Field of invention

The present invention relates to a device and a method of determining a leakage oil amount of a bearing of a wind turbine.

A conventional wind turbine comprises a rotor with rotor blades. The rotor is mounted rotatable to a nacelle of the wind turbine by means of a main bearing. The rotor is thus rotatable about a rotation axis. Some oil is usually leaking from the main bearing. There may be very long periods without wind flow, where the main bearing can be completely dried, but the wind turbine must still be functional even after months or years after a leakage begins to appear.

It is conceivable to measure and monitor oil levels using a pressure sensor to measure an internal oil column pressure. However, such measurement is complicated and inaccurate as there is no other pressure than that which is caused by gravity. Existing flow measurements are based either on fluid mechanical principles which require a certain minimum flow, or on mechanical displacement mechanism which cause a pressure drop and therefore requires a certain pressure.

DE 37 11 513 A1 discloses a system to measure leakage quantities - using variations of a column height in a vessel with an cyclically opened outlet valve.

### Summary of the Invention

It is the object of the present invention to provide a device and a method of accurately and easily measuring a leakage flow from shaft seals on an oil lubricated main bearing in a wind turbine. This object is achieved by the subject matters according to the independent claims. The present invention is further developed as set forth in the dependent claims.

According to a first aspect outside the scope of the claims, a device for determining a leakage oil amount of a main bearing of a wind turbine is provided. The device comprises a container which is configured to collect a leakage oil from the main bearing, a level measurement device which is configured to continuously measure a level of the collected leakage oil in the container, and a determining device which is configured to determine the leakage oil amount of the main bearing based on the measured level of the collected leakage oil in the container.

In an embodiment outside the scope of claims, the level measurement device comprises a floater which is configured to float on the leaked oil and to change its position according to the level of the collected leakage oil.

In an embodiment outside the scope of claims, the device for determining a leakage oil amount further comprises a valve, which is configured to open so as to discharge the collected leakage oil, when the level of the collected leakage oil reached a predetermined level in the container.

In an embodiment outside the scope of claims, the determining device is configured to determine the leakage oil amount of the main bearing based on a speed by which the level of the collected leakage oil in the container increases, wherein the leakage oil amount is obtained by integrating the speed.

According to the claimed invention, a device for determining a leakage oil amount of a main bearing of a wind turbine is provided. The device comprises a container which is configured to collect a leakage oil from the main bearing, a level sensing device which is configured to sense that a level of the collected leakage oil reached a first predetermined level in the container, a valve, which is configured to open so as to discharge the collected leakage oil, when the level of the collected leakage oil reached the first predetermined level in the container, and which is configured to close so as to stop discharging the collected leakage oil, when the level of the leakage oil in the container reached a second predetermined level in the container, the second predetermined level being lower than the first predetermined level, a counting device which is configured to count operations of closing the valve, and a determining device which is configured to determine the leakage oil amount of the main bearing based on the counted operations of closing the valve.

In an embodiment, the level sensing device comprises a first digital sensor which is configured to sense whether the level of the leaked oil is present at the first predetermined level, and a second digital sensor which is configured to sense whether the level of the leaked oil is present at the second predetermined level.

In an embodiment, the device for determining a leakage oil amount further comprises an oil pan which is configured to receive the leakage oil which is discharged from the valve.

In an embodiment, the leakage oil is collected by means of gravitation.

In an embodiment, the device for determining a leakage oil amount further comprises at least one funnel which is configured to collect the leakage oil from the main bearing.

According to an aspect outside the scope of the claims, a method of determining a leakage oil amount of a main bearing of a wind turbine is provided. The method comprising the following steps: collecting a leakage oil from the main bearing in a container; continuously measuring a level of the collected leakage oil in the container; and determining the leakage oil amount of the main bearing based on the measured level of the collected leakage oil in the container.

According to a fourth aspect of the invention, a method of determining a leakage oil amount of a main bearing of a wind turbine is provided. The method comprising the following steps: collecting a leakage oil from the main bearing in a container; sensing that a level of the collected leakage oil reached a first predetermined level in the container; opening a valve to discharge the collected leakage oil from the container, when the level of the collected leakage oil reached the first predetermined level in the container; closing the valve to stop discharging the collected leakage oil, when the level of the leakage oil in the container reached a second predetermined level in the container, the second predetermined level being lower than the first predetermined level; counting operations of closing the valve; and determining the leakage oil amount of the main bearing based on the counted operations of closing the valve.

In an embodiment, the leakage oil is collected by means of gravitation.

The inventive concept involves collecting the leakage oil in a small container, and stepwise measuring a period of filling the container.

The flow is discharged into the container which is then slowly filled with the oil. A sensor close to the top of the container detects when the oil reaches a certain level, and then the valve at the bottom is activated and empty out the oil at the bottom. When the oil level has dropped to a suitably low level, or just after a certain time, the valve closes again. The leakage flow can then be calculated either based on the number of discharges, or, outside the scope of the claims, on the basis of how fast the level rises in the container when the valve is closed.

Contrary to the existing flow measurements, which are either based on fluid mechanical principles which require a certain minimum flow, or on mechanical displacement mechanism which causes a pressure drop and therefore require a certain pressure, the present invention requires only a sensor for detecting that the oil level reaches a certain level, as well as a simple electric controllable valve. The system will be able to operate at a pressure drop corresponding to a few cm liquid height, and it will accumulate very little flow over a very long time.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a wind turbine and the different elements thereof;
- Fig. 2: shows a block diagram of a device for determining a leakage oil amount of a main bearing of a wind turbine according to an embodiment, outside the scope of the claims; and
- Fig. 3: shows a block diagram of a device for determining a leakage oil amount of a main bearing of a wind turbine according to an embodiment; and

### Detailed Description

The illustrations in the drawings are schematically. It is noted that in different figures, similar or identical elements are provided with the same reference signs.

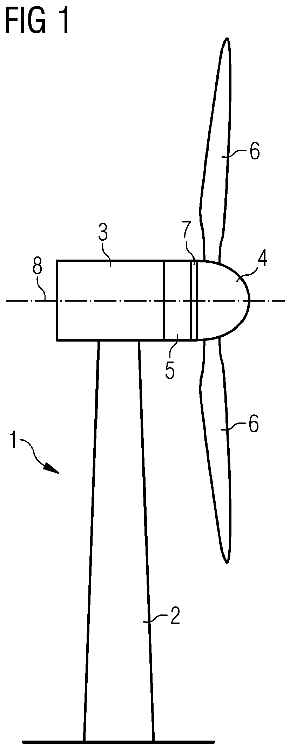

**Fig. 1** shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as the yaw axis.

The wind turbine 1 also comprises a hub 4 with three rotor blades 6 (of which two rotor blades 6 are depicted in Fig. 1). The hub 4 is mounted rotatable with regard to the nacelle 3 by means of a main bearing 7. The hub 4 is mounted rotatable about a rotor axis of rotation 8.

The wind turbine 1 furthermore comprises a generator 5. The generator 5 in turn comprises a rotor connecting the generator 5 with the hub 4. If the hub 4 is connected directly to the generator 5, the wind turbine 1 is referred to as a gear-less, direct-driven wind turbine. Such a generator 5 is referred as direct drive generator 5. As an alternative, the hub 4 may also be connected to the generator 5 via a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the hub 4 into electrical energy in the shape of an AC power.

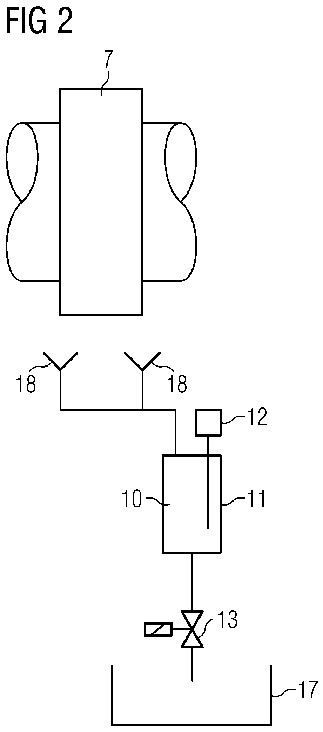

**Fig. 2** shows a block diagram of a device for determining a leakage oil amount of a main bearing 7 of a wind turbine 1 according to an embodiment, outside the scope of the claims. The device for determining a leakage oil amount of a main bearing 7 of a wind turbine 1 comprises a container 10 which is configured to collect a leakage oil from the main bearing 7. The device for determining a leakage oil amount comprises at least one funnel 18 which is arranged below the main bearing 7 and receives the leakage oil which drops out of the main bearing 7. The leakage oil is guided from the funnels 18 into the container 10.

The device for determining a leakage oil amount comprises an analog (or digital) level measurement device 11 which is configured to continuously measure a level of the collected leakage oil in the container 10. In this embodiment, the level measurement device 11 comprises a floater which is configured to float on the leaked oil and to change its position according to the level, i.e., the height, of the collected leakage oil. The level measurement device 11 outputs an analog or digital electric signal which indicates the level of the collected leakage oil.

The device for determining a leakage oil amount comprises a determining device 12 which is configured to determine the leakage oil amount of the main bearing 7 based on the measured level of the collected leakage oil in the container 10. The determining device 12 receives from the level measurement device 11 the analog or digital electric signal which indicates the level of the collected leakage oil. The determining device 12 can determine the leakage oil amount by multiplying the measured level (or level difference) of the collected leakage oil with a surface area of the container 10. Alternatively, the determining device 12 can be configured to determine the leakage oil amount of the main bearing 7 based on a speed by which the level of the collected leakage oil in the container 10 increases, wherein the leakage oil amount is obtained by integrating the speed.

The device further comprises a valve 13, such as an electrical controllable valve (e.g., an open/close valve), which is configured to open so as to discharge the collected leakage oil, when the level of the collected leakage oil reached a predetermined level in the container.

The device further comprises an oil pan 17 which is configured to receive the leakage oil which is discharged from the valve 13. In this embodiment, the leakage oil is entirely collected by means of gravitation. The present embodiment does not need any pressure sensor to measure an internal oil column pressure.

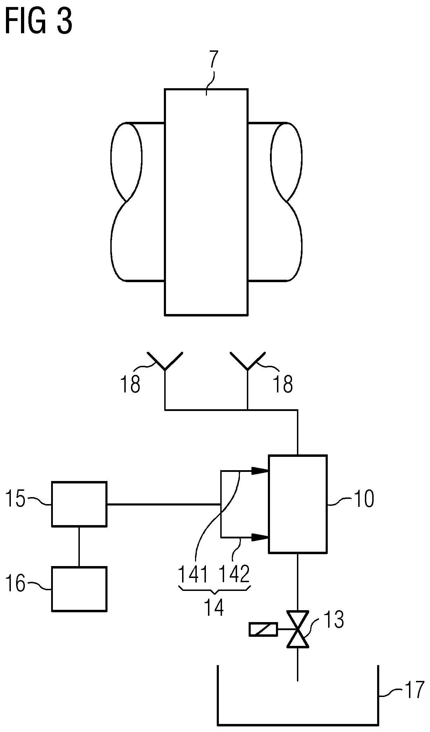

**Fig. 3** shows a block diagram of a device for determining a leakage oil amount of a main bearing 7 of a wind turbine 1 according to another embodiment. The device for determining a leakage oil amount comprises a container 10 which is configured to collect a leakage oil from the main bearing 7. The device for determining a leakage oil amount also comprises at least one funnel 18 which is arranged below the main bearing 7 and receives the leakage oil which drops out of the main bearing 7. The leakage oil is guided from the funnels 18 into the container 10.

The device for determining a leakage oil amount comprises a level sensing device 14 which is configured to sense that a level of the collected leakage oil reached a first predetermined level in the container 10. In more detail, the level sensing device 14 comprises a first digital sensor 141 which is configured to sense whether the level of the leaked oil is present at the first predetermined level, and a second digital sensor 142 which is configured to sense whether the level of the leaked oil is present at the second predetermined level. The first and second digital sensors 141 can be optical, mechanical or electrical sensors.

The device for determining a leakage oil amount comprises a valve 13, such as an electrical controllable valve (e.g., an open/close valve), which is configured to open so as to discharge the collected leakage oil, when the level of the collected leakage oil reached the first predetermined level in the container 10, and which is configured to close so as to stop discharging the collected leakage oil, when the level of the leakage oil in the container 10 reached a second predetermined level in the container 10, the second predetermined level being lower than the first predetermined level, a counting device 15 which is configured to count operations of closing the valve 13, and a determining device 16 which is configured to determine the leakage oil amount of the main bearing 7 based on the counted operations of closing the valve 13.

For example, a surface area A of the container 10 and a height difference h between the first and second digital sensors 141, 142 is known. The volume V therebetween can be expressed as a product of the surface area of the container 10 with the height difference between the first and second digital sensors 141, 142, that means V = h x A.

If the counting device 15 counts a number of n operations of closing the valve 13, the resulting leakage oil amount of the main bearing 7 can be expressed as a product of the volume V with the number x, i.e., n x V.

The device further comprises an oil pan 17 which is configured to receive the leakage oil which is discharged from the valve 13. Also in this embodiment, the leakage oil is entirely collected by means of gravitation. The present embodiment does not need any pressure sensor to measure an internal oil column pressure.

The embodiments of Figures 2 and 3 can be combined, i.e., the device for determining a leakage oil amount can comprise the level measurement device 11 and the level sensing device 14 together with the respective determining devices 12 and 16.

It should be noted that the term "comprising" does not exclude other elements or steps and "a" or "an" does not exclude a plurality.

It should also be noted that reference signs in the claims should not be construed as limiting the scope of the claims.

### List of reference signs:

- 1: wind turbine
- 2: tower
- 3: nacelle
- 4: hub
- 5: generator
- 6: blade
- 7: main bearing
- 8: rotational axis
- 10: container
- 11: level measurement device
- 12: determining device
- 13: valve
- 14: level sensing device
- 15: counting device
- 16: determining device
- 17: oil pan
- 18: funnel
- 141: first digital sensor
- 142: second digital sensor

## Claims

1. A device for determining a leakage oil amount of a main bearing of a wind turbine (1), the device comprising:
a container (10) which is configured to collect a leakage oil from the main bearing (7);
a level sensing device (14) which is configured to sense that a level of the collected leakage oil reached a first predetermined level in the container (10); and
a valve (13), which is configured to open so as to discharge the collected leakage oil, when the level of the collected leakage oil reached the first predetermined level in the container (10), and which is configured to close so as to stop discharging the collected leakage oil, when the level of the leakage oil in the container (10) reached a second predetermined level in the container (10), the second predetermined level being lower than the first predetermined level,
**characterized by**
a counting device (15) which is configured to count operations of closing the valve (13); and
a determining device (16) which is configured to determine the leakage oil amount of the main bearing (7) based on the counted operations of closing the valve (13).

2. The device for determining a leakage oil amount according to the preceding claim, wherein
the level sensing device (14) comprises a first digital sensor (141) which is configured to sense whether the level of the leaked oil is present at the first predetermined level, and a second digital sensor (142) which is configured to sense whether the level of the leaked oil is present at the second predetermined level.

3. The device for determining a leakage oil amount according to any one of the preceding claims, further comprising
an oil pan (17) which is configured to receive the leakage oil which is discharged from the valve (13).

4. The device for determining a leakage oil amount according to any one of the preceding claims, wherein
the leakage oil is collected by means of gravitation.

5. The device for determining a leakage oil amount according to any one of the preceding claims, further comprising
at least one funnel (18) which is configured to collect the leakage oil from the main bearing (7).

6. A method of determining a leakage oil amount of a main bearing of a wind turbine (1), the method comprising the following steps:
collecting a leakage oil from the main bearing (7) in a container (10);
sensing that a level of the collected leakage oil reached a first predetermined level in the container (10);
opening a valve (13) to discharge the collected leakage oil from the container (10), when the level of the collected leakage oil reached the first predetermined level in the container (10); and
closing the valve (13) to stop discharging the collected leakage oil, when the level of the leakage oil in the container (10) reached a second predetermined level in the container (10), the second predetermined level being lower than the first predetermined level,
**characterized by**
counting operations of closing the valve (13); and
determining the leakage oil amount of the main bearing (7) based on the counted operations of closing the valve (13).

7. The method of determining a leakage oil amount according to claim 6, wherein
the leakage oil is collected by means of gravitation.

## Patentansprüche

1. Vorrichtung zum Bestimmen einer Leckölmenge eines Hauptlagers einer Windkraftanlage (1), wobei die Vorrichtung Folgendes umfasst:
einen Behälter (10), der dazu konfiguriert ist, ein Lecköl von dem Hauptlager (7) zu sammeln;
eine Füllstandserfassungsvorrichtung (14), die dazu konfiguriert ist, zu erfassen, dass ein Füllstand des gesammelten Lecköls einen ersten vorbestimmten Füllstand in dem Behälter (10) erreicht hat; und
ein Ventil (13), das dazu konfiguriert ist, sich zu öffnen, um das gesammelte Lecköl abzulassen, wenn der Füllstand des gesammelten Lecköls den ersten vorbestimmten Füllstand in dem Behälter (10) erreicht hat, und das dazu konfiguriert ist, sich zu schließen, um das Ablassen des gesammelten Lecköls zu stoppen, wenn der Füllstand des Lecköls in dem Behälter (10) einen zweiten vorbestimmten Füllstand in dem Behälter (10) erreicht hat, wobei der zweite vorbestimmte Füllstand niedriger ist als der erste vorbestimmte Füllstand,
**gekennzeichnet durch**
eine Zählvorrichtung (15), die dazu konfiguriert ist, Schließvorgänge des Ventils (13) zu zählen; und
eine Bestimmungsvorrichtung (16), die dazu konfiguriert ist, die Leckölmenge des Hauptlagers (7) basierend auf den gezählten Schließvorgängen des Ventils (13) zu bestimmen.

2. Vorrichtung zum Bestimmen einer Leckölmenge nach dem vorhergehenden Anspruch, wobei
die Füllstandserfassungsvorrichtung (14) einen ersten digitalen Sensor (141) umfasst, der dazu konfiguriert ist zu erfassen, ob der Füllstand des ausgelaufenen Öls an dem ersten vorbestimmten Füllstand vorhanden ist, und einen zweiten digitalen Sensor (142), der dazu konfiguriert ist zu erfassen, ob der Füllstand des ausgelaufenen Öls an dem zweiten vorbestimmten Füllstand vorhanden ist.

3. Vorrichtung zum Bestimmen einer Leckölmenge nach einem der vorhergehenden Ansprüche, ferner umfassend
eine Ölwanne (17), die dazu konfiguriert ist, das Lecköl aufzunehmen, das aus dem Ventil (13) abgelassen wird.

4. Vorrichtung zum Bestimmen einer Leckölmenge nach einem der vorhergehenden Ansprüche, wobei
das Lecköl mittels Gravitation gesammelt wird.

5. Vorrichtung zum Bestimmen einer Leckölmenge nach einem der vorhergehenden Ansprüche, ferner umfassend
mindestens einen Trichter (18), der dazu konfiguriert ist, das Lecköl von dem Hauptlager (7) zu sammeln.

6. Verfahren zum Bestimmen einer Leckölmenge eines Hauptlagers einer Windkraftanlage (1), wobei das Verfahren die folgenden Schritte umfasst:
Sammeln eines Lecköls von dem Hauptlager (7) in einem Behälter (10);
Erfassen, dass ein Füllstand des gesammelten Lecköls einen ersten vordefinierten Füllstand in dem Behälter (10) erreicht hat;
Öffnen eines Ventils (13) zum Ablassen des gesammelten Lecköls aus dem Behälter (10), wenn der Füllstand des gesammelten Lecköls den ersten vorbestimmten Füllstand in dem Behälter (10) erreicht hat; und
Schließen des Ventils (13), um das Ablassen des gesammelten Lecköls zu stoppen, wenn der Füllstand des Lecköls in dem Behälter (10) einen zweiten vorbestimmten Füllstand in dem Behälter (10) erreicht hat, wobei der zweite vorbestimmte Füllstand niedriger ist als der erste vorbestimmte Füllstand, **gekennzeichnet durch**
Zählen von Schließvorgängen des Ventils (13); und
Bestimmen der Leckölmenge des Hauptlagers (7) basierend auf den gezählten Schließvorgängen des Ventils (13).

7. Verfahren zum Bestimmen einer Leckölmenge nach Anspruch 6, wobei
das Lecköl mittels Gravitation gesammelt wird.

## Revendications

1. Dispositif de détermination d'une quantité d'huile de fuite d'un palier principal d'une éolienne (1), le dispositif comprenant :
un récipient (10) qui est configuré pour collecter une huile de fuite du palier principal (7) ;
un dispositif de détection de niveau (14) qui est configuré pour détecter qu'un niveau de l'huile de fuite collectée a atteint un premier niveau prédéterminé dans le récipient (10) ; et
une vanne (13) qui est configurée pour s'ouvrir de manière à évacuer l'huile de fuite collectée lorsque le niveau de l'huile de fuite collectée atteint le premier niveau prédéterminé dans le récipient (10), et qui est configurée pour se fermer de manière à arrêter d'évacuer l'huile de fuite collectée lorsque le niveau de l'huile de fuite dans le récipient (10) a atteint un deuxième niveau prédéterminé dans le récipient (10), le deuxième niveau prédéterminé étant inférieur au premier niveau prédéterminé,
**caractérisé par**
un dispositif de comptage (15) qui est configuré pour compter des opérations de fermeture de la vanne (13) ; et
un dispositif de détermination (16) qui est configuré pour déterminer la quantité d'huile de fuite du palier principal (7) sur la base des opérations comptées de fermeture de la vanne (13).

2. Dispositif de détermination d'une quantité d'huile de fuite selon la revendication précédente, dans lequel
le dispositif de détection de niveau (14) comprend un premier capteur numérique (141) qui est configuré pour détecter si le niveau de l'huile de fuite est présent au premier niveau prédéterminé, et un deuxième capteur numérique (142) qui est configuré pour détecter si le niveau de l'huile de fuite est présent au deuxième niveau prédéterminé.

3. Dispositif de détermination d'une quantité d'huile de fuite selon l'une quelconque des revendications précédentes, comprenant en outre
un bac à huile (17) qui est configuré pour recevoir l'huile de fuite qui est évacuée de la vanne (13).

4. Dispositif de détermination d'une quantité d'huile de fuite selon l'une quelconque des revendications précédentes, dans lequel
l'huile de fuite est collectée par gravitation.

5. Dispositif de détermination d'une quantité d'huile de fuite selon l'une quelconque des revendications précédentes, comprenant en outre
au moins un entonnoir (18) qui est configuré pour collecter l'huile de fuite depuis le palier principal (7).

6. Procédé de détermination de la quantité d'huile de fuite d'un palier principal d'une éolienne (1), le procédé comprenant les étapes suivantes :
la collecte d'une huile de fuite depuis le palier principal (7) dans un récipient (10) ;
la détection qu'un niveau de l'huile de fuite collectée a atteint un premier niveau prédéterminé dans le récipient (10) ;
l'ouverture d'une vanne (13) pour évacuer l'huile de fuite collectée depuis le récipient (10), lorsque le niveau de l'huile de fuite collectée atteint le premier niveau prédéterminé dans le récipient (10) ; et
la fermeture de la vanne (13) pour arrêter d'évacuer l'huile de fuite collectée, lorsque le niveau de l'huile de fuite dans le récipient (10) a atteint un deuxième niveau prédéterminé dans le récipient (10), le deuxième niveau prédéterminé étant inférieur au premier niveau prédéterminé,
**caractérisé par**
le comptage d'opérations de fermeture de la vanne (13) ; et
la détermination de la quantité d'huile de fuite du palier principal (7) sur la base des opérations comptées de fermeture de la vanne (13).

7. Procédé de détermination d'une quantité d'huile de fuite selon la revendication 6, dans lequel
l'huile de fuite est collectée par gravitation.
